# EUROPEAN PATENT SPECIFICATION

(11) **EP 4 201 175 B1**
(45) Date of publication and mention of the grant of the patent: **02.09.2026**
(21) Application number: 22213071.8
(22) Date of filing: 13.12.2022
(51) Int. Cl.: A01B 69/00, A01B 69/08

(54) **SYSTEM AND METHOD FOR ADJUSTING SWATH LINES FOR A WORK VEHICLE**
SYSTEM UND VERFAHREN ZUR EINSTELLUNG VON SCHWADENLINIEN FÜR EIN ARBEITSFAHRZEUG
SYSTÈME ET PROCÉDÉ DE RÉGLAGE DE LIGNES DE BALAYAGE POUR UN VÉHICULE DE TRAVAIL

(30) Priority: 23.12.2021 US 202117560989
(43) Date of publication of application: 28.06.2023
(73) Proprietor: CNH Industrial Italia S.p.A., 10156 Torino (IT)
(72) Inventor: DIX, Phillip Duane, Westmont, 60559 (US); GEIYER, Daniel, Oshkosh, 54901 (US); SINGH, Aditya, Racine, 53404 (US); GULATI, Navneet, Racine, 53404 (US)
(74) Representative: CNH Industrial IP Department

(56) References cited:
- US-A1- 2009 265 053
- US-A1- 2021 267 115

## Description

### FIELD OF THE INVENTION

The present disclosure generally relates to work vehicles, such as agricultural vehicles or construction vehicles, and, more particularly, to systems and methods for generating swath lines for a work vehicle.

### BACKGROUND OF THE INVENTION

Modern farming practices strive to increase yields of agricultural fields. As such, agricultural work vehicles, such as tractors, sprayers, harvesters, and/or the like, are used to perform agricultural operations on a field. In general, when performing an agricultural operation, it is necessary for the work vehicle to make a series of passes across the field. However, it is difficult for an operator to control the work vehicle such that passes are consistent and uniformly spaced apart. Inconsistent or non-uniformly spaced passes may result in lower crop yields and/or inefficient performance of the agricultural operation. In this respect, systems have been developed for generating swath lines or guidance lines for guiding a work vehicle along each pass across the field. While such systems work well, further improvements are needed. For example, in certain instances, the swath lines may need to be adjusted after generation.

Accordingly, an improved system and method for adjusting swath lines for a work vehicle would be welcomed in the technology.

US 2021/267115 A1 describes a guidance assembly for an agricultural vehicle includes a pathing system configured to provide an array of swaths. The guidance assembly includes a composite guidance system in communication with an automated driving interface and the pathing system. The composite guidance system includes a turn guidance system configured to guide the agricultural vehicle along at least one turn segment extending between a first zone swath and a transverse second zone swath, and a swath guidance system configured to guide the agricultural vehicle along the first zone swath and the transverse second zone swath. The system includes a comparator configured to compare the agricultural vehicle position with swath departure and arrival locations.

US 2009/265053 A1 describes a computationally efficient method for generating a spiral swath pattern for a region of a field bounded by a convex polygon, the method automatically generating curved portions for the swath pattern having radii of curvature greater than a minimum turning radius based on the minimum turning radius and a definition of the field boundary.

### SUMMARY OF THE INVENTION

Aspects and advantages of the technology will be set forth in part in the following description, or may be obvious from the description, or may be learned through practice of the technology.

In one aspect, the present subject matter is directed to a system for adjusting swath lines for a work vehicle, the system being described in independent claim 1.

In a further aspect, the present subject matter is directed to a method for adjusting swath lines for a work vehicle, the method being described in independent claim 10.

These and other features, aspects and advantages of the present technology will become better understood with reference to the following description and appended claims. The accompanying drawings, which constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of a work vehicle and an associated agricultural implement in accordance with aspects of the present subject matter;
FIG. 2 illustrates a schematic view of one embodiment of a system for adjusting swath lines for a work vehicle in accordance with aspects of the present subject matter;
FIG. 3 illustrates a flow diagram providing one embodiment of control logic for adjusting swath lines for a work vehicle in accordance with aspects of the present subject matter;
FIG. 4 illustrates a diagrammatic view of an example swath line for use in guiding a work vehicle across a field in accordance with aspects of the present subject matter; and
FIG. 5 illustrates a flow diagram of one embodiment of a method for adjusting swath lines for a work vehicle in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made on condition that the scope of the appended independent claims is respected.

In general, the present subject matter is directed to a system and a method for adjusting swath lines for a work vehicle. Specifically, in several embodiments, the computing system is configured to access a swath line corresponding to a pass to be made across a field by the vehicle. In one embodiment, the computing system may access a swath line that was generated during a previous operation on the field. Furthermore, the computing system is configured to determine one or more operating parameters of the work vehicle or the associated implement based on one or more received inputs. For example, such operating parameter(s) may include the vehicle length, maximum vehicle steering angle, the hitch type and/or length of the vehicle/implement, the slew angle of the vehicle and implement, and/or the like. Additionally, prior to making the pass across the field, the computing system is configured to adjust at least a portion of the swath line on the determined operating parameter(s). Thereafter, the computing system is configured to control the operation of the work vehicle such that the work vehicle travels along the adjusted portion of the swath line to make the pass across the field.

Adjusting a swath line used to guide a work vehicle across a field based on an operating parameter(s) of the vehicle and/or an associated implement prior to making the pass across the field improves the operation of the vehicle. More specifically, different vehicles and vehicle/implement combinations may have different operating parameter(s) (e.g., turning radii, slew radii, etc.) and, thus, different performance characteristics. As such, one vehicle or vehicle/implement combination may be unable to follow a swath line generated based on the recorded travel path of another vehicle or vehicle/implement combination. In this respect, by adjusting the swath line (e.g., by increasing the radius of its curved portions) based on the operating parameter(s) of the vehicle and/or its implement prior to making a pass across the field, the disclosed system and method ensure that different work vehicles with varying performance characteristics can traverse the swath line.

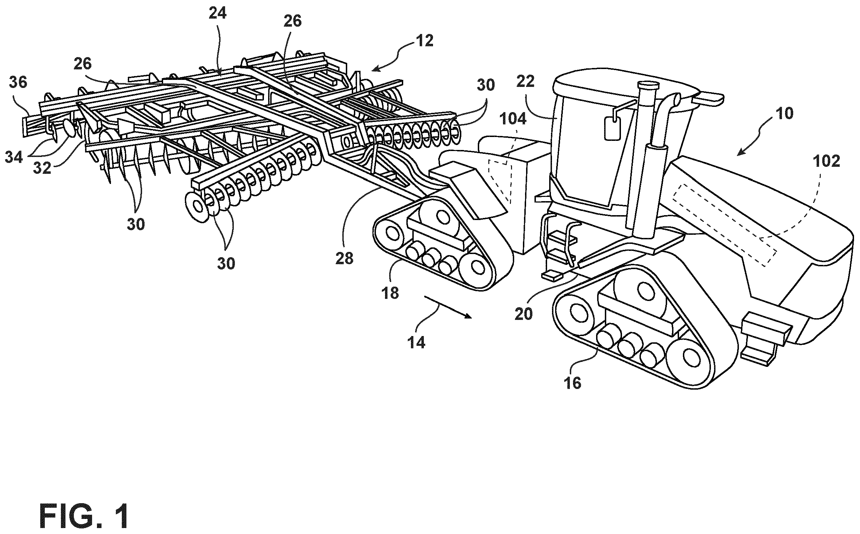

Referring now to the drawings, FIG. 1 illustrates a perspective view of a work vehicle 10 towing an associated agricultural implement 12 across a field in a direction of travel (indicated by arrow 14). In the illustrated embodiment, the work vehicle 10 is configured as an agricultural vehicle (e.g., an agricultural tractor) and the agricultural implement 12 is configured as a tillage implement (e.g., a disk ripper). However, in alternative embodiments, the work vehicle 10 may correspond to any other suitable type of agricultural vehicle (e.g., an agricultural harvester, a self-propelled sprayer, etc.) or construction vehicle (e.g., a dozer, a grader, a loader, etc.) and the agricultural implement 12 may correspond to any other suitable type of agricultural implement (e.g., a seed-planting implement, a towable sprayer, etc.). Additionally, in some embodiments, the vehicle 10 may not be configured to tow an implement.

As shown in FIG. 1, the vehicle 10 includes a pair of front track assemblies 16, a pair of rear track assemblies 18, and a frame or chassis 20 coupled to and supported by the track assemblies 16, 18. An operator's cab 22 may be supported by a portion of the chassis 20 and may house various input devices for permitting an operator to control the operation of one or more components of the vehicle 10 and/or one or more components of the implement 12. Furthermore, the vehicle 10 may include an engine 102 and a transmission 104 mounted on the chassis 20. The transmission 104 may be operably coupled to the engine 102 and may provide variably adjusted gear ratios for transferring engine power to the track assemblies 16, 18 via a drive axle assembly (not shown) (or via axles if multiple drive axles are employed).

Additionally, as shown in FIG. 1, the implement 12 includes a frame 24. More specifically, the frame 24 generally includes a plurality of structural frame members 26, such as beams, bars, and/or the like, which are configured to support or couple to a plurality of components. For example, as will be described below, the frame 24 may be configured to support one or more ground-engaging tools configured to perform an agricultural operation on a field as the implement 12 travels across the field. Furthermore, a hitch assembly 28 may be connected to the frame 24 and configured to couple the implement 12 to the vehicle 10.

In several embodiments, the frame 24 may support one or more gangs or sets of disk blades 30. Each disk blade 30 may, in turn, be configured to penetrate into or otherwise engage the soil as the implement 12 is pulled through the field. In this regard, the various gangs of disk blades 30 may be oriented at an angle relative to the direction of travel 14 to promote more effective tilling of the soil. In the embodiment shown in FIG. 1, the implement 12 includes four gangs of disk blades 30 supported on the frame 24 adjacent to its forward end. However, in alternative embodiments, the implement 12 may include any other suitable number of gangs. Furthermore, in one embodiment, the gangs of disk blades 30 may be mounted to the frame 24 at any other suitable location, such as adjacent to its aft end.

Moreover, in several embodiments, the implement frame 24 may be configured to support other ground-engaging tools. For instance, in the illustrated embodiment, the frame 24 is configured to support a plurality of shanks 32. As shown, the shanks 32 are spaced apart from each other on the frame 24 in a lateral direction of the implement 12. The lateral direction, in turn, extends perpendicular to the direction of travel 14. As such, the shanks 32 are configured to rip or otherwise till the soil as the implement 12 is towed across the field. Furthermore, in the illustrated embodiment, the frame 24 is also configured to support a plurality of leveling blades 34 and a plurality of rolling (or crumbler) basket assemblies 36 positioned aft of the shanks 32. In such an embodiment, the leveling blades 34 may be spaced apart from each other in the lateral direction. However, in other embodiments, any other suitable ground-engaging tools may be coupled to and supported by the implement frame 24.

The configuration of the work vehicle 10 and the associated agricultural implement 12 described above and shown in FIG. 1 is provided only to place the present subject matter in an exemplary field of use. Thus, the present subject matter may be readily adaptable to any manner of work vehicle and/or implement configuration.

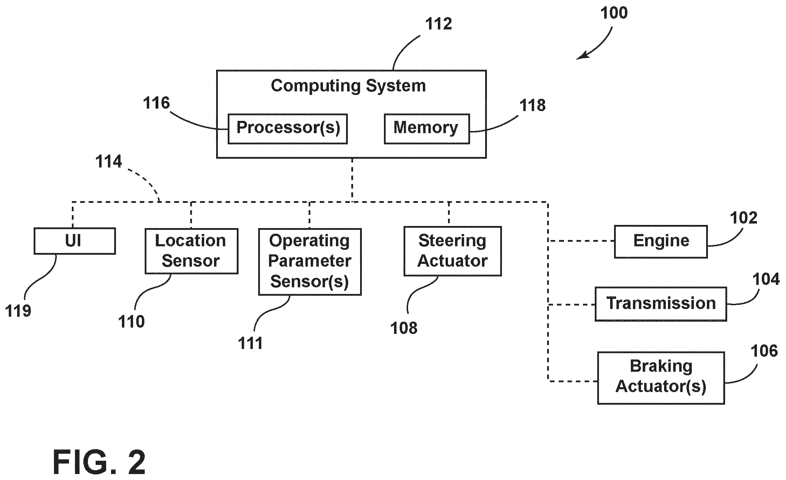

Referring now to FIG. 2, a schematic view of one embodiment of a system 100 for adjusting swath lines for a work vehicle is illustrated in accordance with aspects of the present subject matter. In general, the system 100 will be described herein with reference to the work vehicle 10 and the agricultural implement 12 described above with reference to FIG. 1. However, the disclosed system 100 may generally be used with work vehicles having any other suitable vehicle configuration and/or agricultural implements having any other suitable implement configuration.

As shown in FIG. 2, the system 100 includes one or more components of the work vehicle 10. For example, in the illustrated embodiment, the system 100 includes the engine 102 and the transmission 104 of the work vehicle 10. Additionally, in the illustrated embodiment, the system 100 includes one or more braking actuators 106 of the vehicle 10. In general, when activated, the braking actuator(s) 106 may reduce the speed at which the vehicle/implement 10/12 moves across the field, such as by converting energy associated with the movement of the vehicle/implement 10/12 into heat. For example, in one embodiment, the braking actuator(s) 106 may correspond to a suitable hydraulic cylinder(s) configured to push a stationary frictional element(s) (not shown), such as a brake shoe(s) or a brake caliper(s), against a rotating element(s) (not shown), such as a brake drum(s) or a brake disk(s). However, in alternative embodiments, the braking actuator(s) 106 may any other suitable hydraulic, pneumatic, mechanical, and/or electrical component(s) configured to convert the rotation of the rotating element(s) into heat.

Furthermore, in several embodiments, the system 100 may include a steering actuator 108 of the work vehicle 10. In general, the steering actuator 108 is configured to adjust the direction of travel 14 of the work vehicle 10. For example, the steering actuator 108 may correspond to an electric motor, an electric linear actuator, a hydraulic cylinder, a pneumatic cylinder, or any other suitable actuator coupled to suitable mechanical assembly, such as a rack and pinion or a worm gear assembly.

Additionally, the system 100 includes a location sensor 110 may be provided in operative association with the work vehicle 10 and/or the implement 12. In general, the location sensor 110 may be configured to determine or otherwise capture data indicative of the current location of the work vehicle 10 and/or the associated implement 12 using a satellite navigation positioning system (e.g., a GPS system, a Galileo positioning system, the Global Navigation satellite system (GLONASS), the BeiDou Satellite Navigation and Positioning system, and/or the like). In such an embodiment, the location data captured by the location sensor 110 may be transmitted to a computing system of the work vehicle 10 and/or the implement 12 (e.g., in the form coordinates) and stored within the computing system's memory for subsequent processing and/or analysis. Thus, the location data received from the location sensor 110 may be used to geo-locate the vehicle 10 within the field, thereby allowing for recording of the travel path of the vehicle/implement 10/12 across the field.

Moreover, the system 100 includes one or more operating parameter sensors 111. In general, each operating parameter sensor 111 is configured to capture data indicative of an operating parameter of the vehicle 10 and/or the associated implement 12. As will be described below, the data captured by the operating parameter sensor(s) 111 may be used to adjust at least a portion of a swath line being used to guide the work vehicle/implement 10/12 across the field. This, in turn, ensures the vehicle/implement 10/12 can travel along the swath line, such as when the swath line was generated based on the recorded travel path of another vehicle with differing performance characteristics.

In several embodiments, the operating parameter sensor(s) 111 may be configured to capture data indicative of any suitable operating parameter(s) of the vehicle 10 and/or the associated implement 12. For example, the operating parameter sensor(s) 111 may be configured to capture data indicative of the minimum turning radius of the vehicle 10 and/or the minimum slew radius of the vehicle 10 and the implement 12. The slew radius, in turn, corresponds to the turning radius of the vehicle 10 and the associated implement 12. In this respect, the operating parameter sensor(s) 111 may correspond to any suitable sensor(s) or sensing device(s) configured to capture data indicative of the above operating parameter(s), such as a potentiometer(s), a Hall effect sensor(s), and/or the like. However, in alternative embodiments, the operating parameter sensor(s) may be configured to capture data indicative of any other suitable vehicle dynamics parameter(s) in addition to or in lieu of above-described operating parameters.

In addition, the system 100 includes a computing system 112 communicatively coupled to one or more components of the work vehicle 10, the implement 12, and/or the system 100 to allow the operation of such components to be electronically or automatically controlled by the computing system 112. For instance, the computing system 112 may be communicatively coupled to the sensors 110 via a communicative link 114. As such, the computing system 112 may be configured to receive data (e.g., coordinates) from the location sensor 110 that is indicative of the location of the vehicle/implement 10/12 within the field. Moreover, the computing system 112 may be communicatively coupled to the operating parameter sensor(s) 111 via the communicative link 114. As such, the computing system 112 may be configured to receive data from the operating parameter sensor(s) 111 that is indicative of one or more operating parameters of the vehicle 10 and/or implement 12. Furthermore, the computing system 112 may be communicatively coupled to various components of the vehicle 10, such as the engine 102, the transmission 104, the braking actuator(s) 106, and/or the steering actuator 108, via the communicative link 114. In this respect, the computing system 112 may be configured to control the operation of such components 102, 104, 106, 108 to the operation of the vehicle/implement 10/12 (e.g., its direction of travel 14, ground speed, etc.). In addition, the computing system 112 may be communicatively coupled to any other suitable components of the vehicle 10, the implement 12, and/or the system 100.

In general, the computing system 112 may comprise one or more processor-based devices, such as a given controller or computing device or any suitable combination of controllers or computing devices. Thus, in several embodiments, the computing system 112 may include one or more processor(s) 116 and associated memory device(s) 118 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 118 of the computing system 112 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 118 may generally be configured to store suitable computer-readable instructions that, when implemented by the processor(s) 116, configure the computing system 112 to perform various computer-implemented functions, such as one or more aspects of the methods and algorithms that will be described herein. In addition, the computing system 112 may also include various other suitable components, such as a communications circuit or module, one or more input/output channels, a data/control bus and/or the like.

The various functions of the computing system 112 may be performed by a single processor-based device or may be distributed across any number of processor-based devices, in which instance such devices may be considered to form part of the computing system 112. For instance, the functions of the computing system 112 may be distributed across multiple application-specific controllers or computing devices, such as a navigation controller, an engine controller, a transmission controller, an implement controller, and/or the like.

Furthermore, the system 100 may also include a user interface 119. More specifically, the user interface 119 may be configured to receive inputs (e.g., inputs associated with an operating parameter(s) of the vehicle 10 and/or the implement 12) from the operator. As such, the user interface 119 may include one or more input devices, such as touchscreens, keypads, touchpads, knobs, buttons, sliders, switches, mice, microphones, and/or the like, which are configured to receive inputs from the operator. The user interface 119 may, in turn, be communicatively coupled to the computing system 112 via the communicative link 114 to permit the received inputs to be transmitted from the user interface 119 to the computing system 112. In addition, some embodiments of the user interface 119 may include one or more feedback devices (not shown), such as display screens, speakers, warning lights, and/or the like, which are configured to provide feedback from the computing system 112 to the operator. In one embodiment, the user interface 119 may be mounted or otherwise positioned within the cab 22 of the vehicle 10. However, in alternative embodiments, the user interface 119 may mounted at any other suitable location.

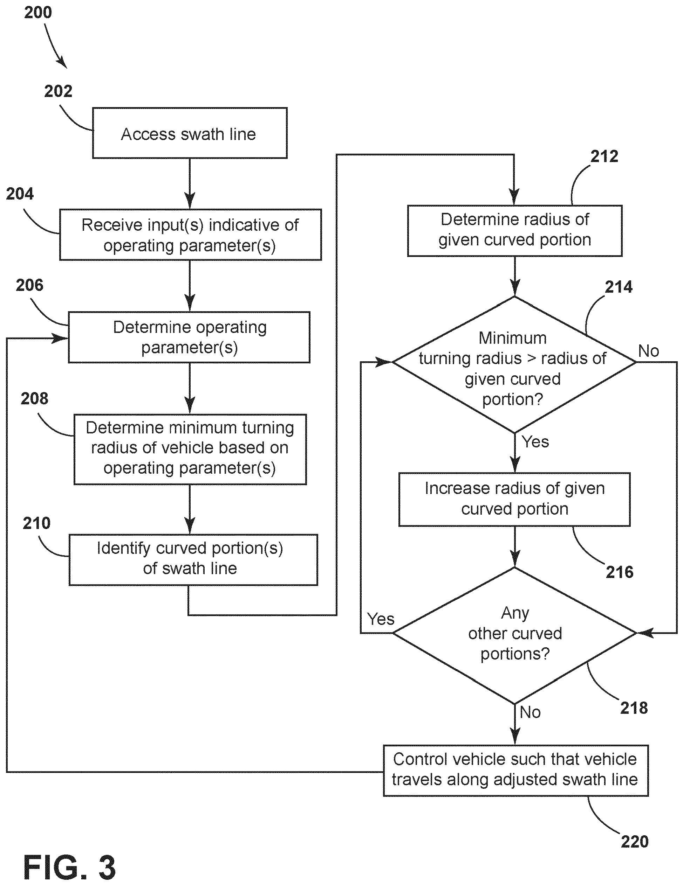

Referring now to FIG. 3, a flow diagram of one embodiment of control logic 200 that may be executed by the computing system 112 (or any other suitable computing system) for adjusting swath lines for a work vehicle is illustrated in accordance with aspects of the present subject matter. Specifically, the control logic 200 shown in FIG. 3 is representative of steps of one embodiment of an algorithm that can be executed to adjust swath lines for a work vehicle based on one or more operating parameters of the vehicle and/or an associated implement to ensure the vehicle/implement can travel along the swath lines regardless of vehicle performance. Thus, in several embodiments, the control logic 200 may be advantageously utilized in association with a system installed on or forming part of a work vehicle to allow for real-time adjustment of swath lines for a work vehicle without requiring substantial computing resources and/or processing time. However, in other embodiments, the control logic 200 may be used in association with any other suitable system, application, and/or the like for generating swath lines for a work vehicle.

As shown, at (202), the control logic 200 includes accessing a swath line corresponding to a pass to be made across a field by a work vehicle. Specifically, in several embodiments, the computing system 112 may be configured to access a swath line corresponding to a pass to be made across a field (e.g., when performing an agricultural operation) by the vehicle/implement 10/12. For example, in one embodiment, the swath line may be generated during a previous operation (such as by recording the travel path of a vehicle performing the previous operation) and stored in the memory device(s) 118 of the computing system 112. Thereafter, the computing system 112 may retrieve the stored swath line from the memory device(s) 118 before performing the corresponding pass across the field.

Furthermore, at (204), the control logic 200 includes receiving an input indicative of an operating parameter of the work vehicle and/or the associated implement. Specifically, in several embodiments, the computing system 112 is configured to receive one or more inputs indicative of an operating parameter(s) of the work vehicle 10 and/or the associated implement 12. As will be described below, the received input(s) is used to adjust at least a portion of a swath line being used to guide the work vehicle 10 across the field to ensure the vehicle 10 can travel along the swath line.

At (204), the computing system 112 may receive the input(s) from any suitable source. For example, in some embodiments, the computing system 112 may receive the input(s) from the operating parameter sensor(s) 111. Specifically, in such embodiments, the computing system 112 may be communicatively coupled to the operating parameter sensor(s) 111 via the communicative link 114. In this respect, prior to making the pass across the field, the computing system 112 may receive operating parameter data from the operating parameter sensor(s) 111. In other embodiments, the computing system 112 may receive the input(s) from the user interface 119. Specifically, in such embodiments, the computing system 112 may be communicatively coupled to the user interface 119 via the communicative link 114. In this respect, prior to making the pass across the field, the operator may provide one or more operating parameter inputs to the user interface 119. Thereafter, the input(s) may be transmitted to the computing system 112 via the communicative link 114. Moreover, in further embodiments, the computing system 112 may receive the input(s) from its memory device(s) 118. Specifically, in such embodiments, prior to making the pass across the field, the computing system 112 may be configured to access one or more operating parameters stored within the memory device(s) 118. In one embodiment, the computing system 112 may receive the input(s) from two or more of the operating parameter sensor(s) 111, the user interface 119, or the memory device(s) 118.

Additionally, at (206), the control logic 200 includes determining the operating parameter of the work vehicle and/or the associated implement based on the received input. Specifically, in several embodiments, prior to the vehicle/implement 10/12 making the pass, the computing system 112 may determine one or more operating parameters of the work vehicle 10 and/or the implement 12 based on the input(s) received at (204).

At (206), any suitable operating parameter(s) of the vehicle 10 and/or the implement 12 may be determined. In general, the operating parameter(s) determined at (206) may be a predetermined parameter(s) of the vehicle 10 and/or implement 12 set during prior to use in the field that affects the ability of the vehicle/implement 10/12 to the follow the swath line accessed at (202). For example, in some embodiments, the determined operating parameter(s) may include the length of the vehicle 10 and/or implement 12, the maximum steering angle of the vehicle 10, the hitch type (e.g., drawbar or trailing) and/or hitch length of the vehicle/implement 10/12, the slew angle of the vehicle 10 and implement 12, and/or the like.

As will be described below, the operating parameter(s) determined at (206) is used to adjust accessed swath line to ensure the vehicle/implement 10/12 can travel along the swath line, such as when the swath line was generated based on the recorded travel path of another vehicle/implement with differing performance characteristics. For example, the curved portion(s) of accessed swath line may be adjusted based on the determined operating parameter(s).

In addition, at (208), the control logic 200 includes determining the minimum turning radius of the work vehicle based on the determined operating parameter. More specifically, different vehicle and/or vehicle/implement combinations generally have different performance characteristics. For example, one vehicle may be able to travel along a curved portion of a swath line, while another vehicle with different performance characteristics may not. As such, in several embodiments, the computing system 112 may determine the minimum turning radius of the vehicle 10 and/or the minimum slew radius of the vehicle 10 and implement 12 based the determined operating parameter(s). The minimum turning radius and/or the minimum slew radius may be determined based on the operating parameter(s) determined at (206) or determined directly at (206).

Furthermore, at (210), the control logic 200 includes identifying a curved portion of the accessed swath line. Specifically, in several embodiments, the computing system 112 may analyze the portion of the accessed swath line to identify any curved portions thereof. For example, the computing system 112 may use any suitable algorithm(s) or technique(s) to identify the curved portion(s) of the accessed swath line.

Additionally, at (212), the control logic 200 includes determining the radius of a given identified curved portion. Specifically, in several embodiments, the computing system 112 may determine the radius of a given curved portion of the swath line identified at (210). For example, the computing system 112 may use any suitable algorithm(s) or technique(s) to determine the radius of the given curved portion.

Moreover, at (214), the control logic 200 includes comparing the determined minimum turning radius of the work vehicle to the determined radius of the given identified curved portion. Specifically, in several embodiments, the computing system 112 may compare the minimum turning radius of the work vehicle 10 and/or the slew angle of the vehicle 10 and the implement 12 determined at (208) to the radius of the given identified curved portion determined at (212). When the minimum turning radius of the work vehicle 10 and/or the slew angle of the vehicle 10 and the implement 12 is less the radius of the given curved portion, no adjustment of the given curved portion of the swath line is needed. In such instances, the control logic 200 proceeds to (218). Conversely, when the minimum turning radius of the work vehicle 10 and/or slew angle of the vehicle 10 and the implement 12 is greater the radius of the given identified curved portion, the vehicle 10 and/or implement 12 are unable to traverse the given curved portion. In such instances, the control logic 200 proceeds to (216).

In addition, at (216), the control logic 200 includes adjusting the given curved portion of the accessed swath line such that the radius of the given curved portion is increased. Specifically, in such instances, the computing system 112 may adjust the given curved portion of the accessed swath line such that its radius is increased, thereby allowing the vehicle/implement 10/12 to travel long the adjusted portion. For example, the radius of the given curved portion may be increased to be equal to or greater than (e.g., five percent greater than) than the minimum turning radius or slew radii (e.g., whichever is larger).

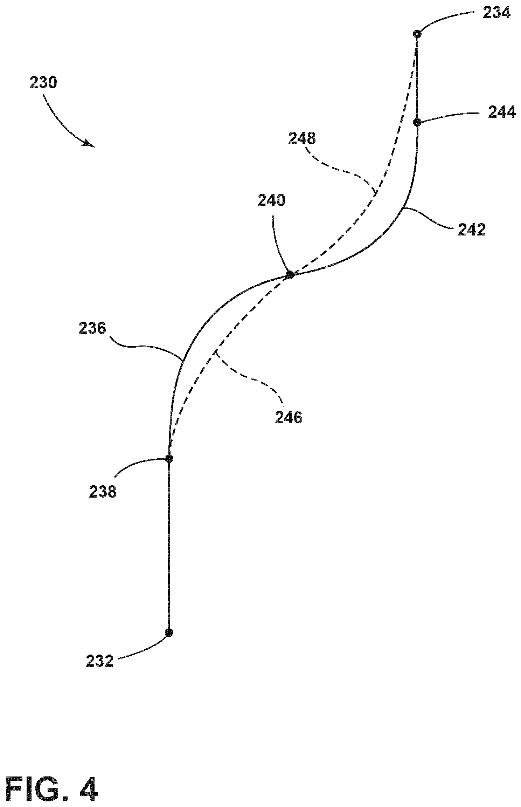

For example, FIG. 4 illustrates an example swath line 230 for use in guiding the vehicle/implement 10/12 across the field. More specifically, the swath line 230 extends from a point 232 to a point 234. Furthermore, the swath line 130 includes a first curved portion 236 extending from a point 238 to a point 240 and a second curved portion 242 extending from a point 240 to a point 244. As shown, the first and second curved portions 236, 242 have been adjusted (e.g., as indicated by dashed lines 246 and 248, respectively) to increase their radii. Thus, the minimum turning and slew radii needed to traverse the adjusted curved portions 246, 248 is greater to allow the vehicle/implement 10/12 to travel along these portions, such as when the performance characteristic(s) of the vehicle/implement 10/12 fall below that the vehicle/implement used to generate the swath line.

Referring again to FIG. 3, at (218), the control logic 200 includes determining whether there are any other curved portions of the accessed swath that need to be analyzed. Specifically, in several embodiments, after analyzing and, if necessary, adjusting the given curved portion of the swath line at (212) - (216), the computing system 112 is configured to determine whether there are any other curved portions of the accessed swath that need to be analyzed. When another curved portion of the swath line needs to be analyzed, the control logic 200 returns to (212). Conversely, when there are no other curved portions of the swath line that need to be analyzed, the control logic 200 proceeds to (220).

Moreover, at (220), the control logic 200 includes controlling the operation of the work vehicle such that the work vehicle travels along the adjusted portion of the swath line. Specifically, in several embodiments, the computing system 112 is configured to configured to control the operation of one or more components of the work vehicle 10 and/or the associated implement 12 such that the vehicle/implement 10/12 travels along the adjusted swath line. For example, the computing system 112 may receive location data (e.g., coordinates) from the location sensor 110 via the communicative link 114. The received location data may, in turn, be used to determine the position of the vehicle/implement 10/12 relative to the adjusted swath line. In this respect, the computing system 112 may transmit control signals to the steering actuator 108 via the communicative link 114 to control the direction of travel 14 of the vehicle/implement 10/12 such that the vehicle/implement 10/12 travels along the adjusted swath line to make the pass. Thereafter, the control logic 200 may return to (204).

Adjusting a swath line used to guide a work vehicle across a field based on the operating parameter(s) of the vehicle 10 and/or the implement 12 prior to making a pass across the field improves the operation of the vehicle. More specifically, different vehicles and vehicle/implement combinations may have different operating parameter(s) (e.g., turning radii, slew radii, etc.) and, thus, different performance characteristics. As such, one vehicle or vehicle/implement combination may be unable to follow a swath line generated based on the recorded travel path of another vehicle or vehicle/implement combination. In this respect, by adjusting the swath line (e.g., by increasing the radius of its curved portions) based on the operating parameter(s) of the vehicle 10 and/or the implement 12 prior to making the pass across the field, the disclosed system and method ensure that different work vehicles with varying performance characteristics can traverse the swath line.

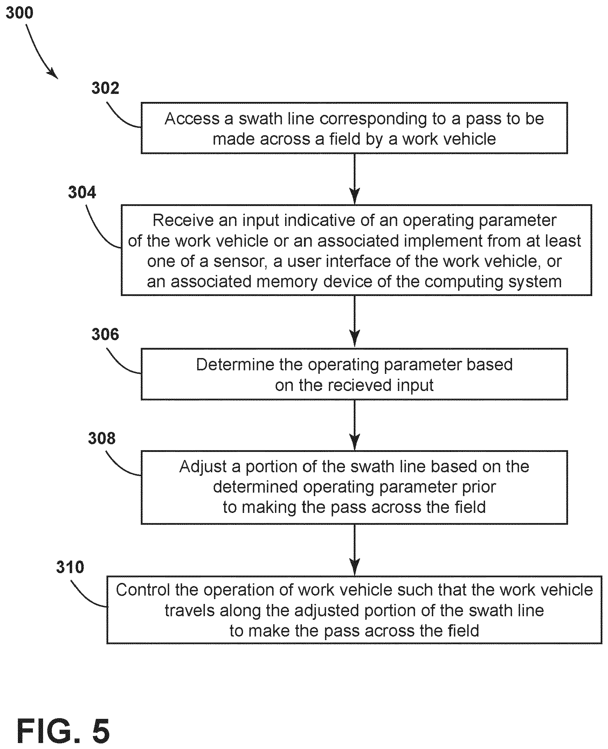

Referring now to FIG. 5, a flow diagram of one embodiment of a method 300 for adjusting swath lines for a work vehicle is illustrated in accordance with aspects of the present subject matter. In general, the method 300 will be described herein with reference to the work vehicle 10, the agricultural implement 12, and the system 100 described above with reference to FIGS. 1-4. However, the disclosed method 300 may generally be implemented with any work vehicle having any suitable vehicle configuration, with any agricultural implement having any suitable implement configuration, and/or any within system having any suitable system configuration. In addition, although FIG. 5 depicts steps performed in a particular order for purposes of illustration and discussion, the methods discussed herein are not limited to any particular order or arrangement. The various steps of the methods disclosed herein can be omitted, rearranged, combined, and/or adapted in various ways without deviating from the scope of the present disclosure.

As shown in FIG. 5, at (302), the method 300 includes accessing, with a computing system, a swath line corresponding to a pass to be made across a field by a work vehicle. For example, as described above, the computing system 112 may be configured to access a swath line (e.g., stored within its memory device(s) 118) corresponding to a pass to be made across a field by the work vehicle/implement 10/12.

Additionally, at (304), the method 300 includes receiving, with the computing system, an input indicative of an operating parameter of the work vehicle or an associated implement from at least one of a sensor, a user interface of the work vehicle, or an associated memory device of the computing system. For example, as described above, the computing system 112 may be configured to receive one or more inputs indicative of an operating parameter(s) of the work vehicle 10 or the implement 12 from the operating parameter sensor(s) 111, the user interface 119, or the memory device(s) 118.

Moreover, as shown in FIG. 5, at (306), the method 300 includes determining, with the computing system, the operating parameter based on the received input. For example, as described above, the computing system 112 may be configured to determine the operating parameter(s) based on the received input(s).

Furthermore, at (308), the method 300 includes adjusting, with the computing system, a portion of the swath line based on the determined operating parameter prior to making the pass across the field. For example, as described above, the computing system 112 may be configured to adjust at least a portion of the swath line based on the determined operating parameter prior to the vehicle/implement 10/12 making the pass across the field.

In addition, as shown in FIG. 5, at (310), the method 300 includes controlling, with the computing system, the operation of the work vehicle such that the work vehicle travels along the adjusted portion of the swath line to make the pass across the field. For example, as described above, the computing system 112 may be configured to control the operation of the vehicle 10 such that the vehicle/implement 10/12 travels along the adjusted portion of the swath line to make the pass across the field.

It is to be understood that the steps of the control logic 200 and the method 300 are performed by the computing system 112 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 112 described herein, such as the control logic 200 and the method 300, is implemented in software code or instructions which are tangibly stored on a tangible computer readable medium. The computing system 112 loads the software code or instructions via a direct interface with the computer readable medium or via a wired and/or wireless network. Upon loading and executing such software code or instructions by the computing system 112, the computing system 112 may perform any of the functionality of the computing system 112 described herein, including any steps of the control logic 200 and the method 300 described herein.

## Claims

1. A system (100) for adjusting swath lines for a work vehicle (10), the system (100) comprising a sensor (111) configured to capture operating parameter data associated with the work vehicle (10) or an associated implement (12), a user interface (119) configured to receive an operating parameter input from an operator of the work vehicle (10) or the associated implement (12), and a computing system (112) communicatively coupled to the sensor (111) and the user interface (119), the computing system (112) configured to:
access a swath line corresponding to a pass to be made across a field by the work vehicle (10),
receive an input indicative of an operating parameter of the work vehicle (10) or the associated implement (12) from at least one of the sensor (111), the user interface (119), or an associated memory device (118) of the computing system (112);
determine the operating parameter based on the received input;
adjust a portion of the swath line based on the determined operating parameter prior to making the pass across the field; and
control an operation of the work vehicle (10) such that the work vehicle (10) travels along the adjusted portion of the swath line to make the pass across the field,
**characterized in that** the operating parameter comprises a slew angle of the work vehicle (10) and the associated implement (12).

2. The system (100) as in claim 1, wherein, when adjusting the portion of the swath line, the computing system (112) is further configured to adjust one or more curved portions of the swath line based on the determined operating parameter prior to making the pass across the field.

3. The system (100) as in any preceding claim, wherein, when adjusting at least the portion of the swath line, the computing system (112) is further configured to:
identify a curved portion of the accessed swath line;
determine a radius of the identified curved portion;
determine a minimum turning radius of the work vehicle (10) based on the determined operating parameter;
compare the radius of the identified curved portion and the minimum turning radius of the work vehicle (10); and
when the radius of the identified curved portion falls below the minimum turning radius of the work vehicle (10), adjust the identified curved portion of the accessed swath line prior to making the pass across the field.

4. The system (100) as in any preceding claim, wherein, when adjusting the identified curved portion of the accessed swath line, the computing system (112) is further configured to adjust the identified curved portion of the accessed swath line such that the radius of the identified curved portion is increased prior to making the pass across the field.

5. The system (100) as in any preceding claim, wherein the operating parameter comprises at least one of a length of the work vehicle (10) or a maximum steering angle of the work vehicle (10).

6. The system (100) as in any preceding claim, wherein the operating parameter comprises at least one of a hitch length or a hitch type.

7. The system (100) as in any preceding claim, wherein, when receiving the input, the computing system (112) is further configured to receive the input indicative of the operating parameter of the work vehicle (10) from the sensor (111).

8. The system (100) as in any preceding claim, wherein, when receiving the input, the computing system (112) is further configured to receive the input indicative of the operating parameter of the work vehicle (10) from the user interface (119).

9. The system (100) as in any preceding claim, wherein, when receiving the input, the computing system (112) is further configured to access the input indicative of the operating parameter of the associated memory device (118) of the computing system (112).

10. A computer-implemented method (300) for adjusting swath lines for a work vehicle (10), the method (300) comprising:
accessing a swath line corresponding to a pass to be made across a field by the work vehicle (10),
receiving an input indicative of an operating parameter of the work vehicle (10) or an associated implement (12) from at least one of a sensor (111), a user interface (119) of the work vehicle (10), or an associated memory device (118) of the computing system (112);
determining the operating parameter based on the received input;
adjusting a portion of the swath line based on the determined operating parameter prior to making the pass across the field; and
controlling an operation of the work vehicle (10) such that the work vehicle (10) travels along the adjusted portion of the swath line to make the pass across the field
**characterized in that** the operating parameter comprises a slew angle of the work vehicle (10) and the associated implement (12).

11. The method (300) as in claim 10, wherein adjusting the portion of the swath line comprises adjusting one or more curved portions of the swath line based on the determined operating parameter.

12. The method (300) as in any of claims 10 or 11, wherein adjusting the portion of the swath line comprises:
identifying a curved portion of the accessed swath line;
determining a radius of the identified curved portion;
determining a minimum turning radius of the work vehicle (10) based on the determined operating parameter;
comparing the radius of the identified curved portion and the minimum turning radius of the work vehicle (10); and
when the radius of the identified curved portion falls below the minimum turning radius of the work vehicle (10), adjusting the identified curved portion of the accessed swath line.

13. The method (300) as in any of claims 10 through 12, wherein adjusting the portion of the swath line further comprises adjusting the identified curved portion of the accessed swath line such that the radius of the identified curved portion is increased.

14. The method (300) as in any of claims 10 through 13, wherein the operating parameter comprises at least one of a length of the work vehicle (10) or a maximum steering angle of the work vehicle (10).

## Patentansprüche

1. System (100) zum Anpassen von Schwadenlinien für ein Arbeitsfahrzeug (10), wobei das System (100) umfasst: einen Sensor (111), der konfiguriert ist, um Betriebsparameterdaten zu erfassen, die dem Arbeitsfahrzeug (10) oder einem zugehörigen Arbeitsgerät (12) zugeordnet sind, eine Bedienerschnittstelle (119), die konfiguriert ist, um eine Betriebsparametereingabe von einem Bediener des Arbeitsfahrzeugs (10) oder des zugehörigen Arbeitsgeräts (12) zu empfangen, und ein Rechnersystem (112), das kommunikativ an den Sensor (111) und die Bedienerschnittstelle (119) gekoppelt ist, wobei das Rechnersystem (112) konfiguriert ist zum:
Zugreifen auf eine Schwadenlinie, die einer durch das Arbeitsfahrzeug (10) über ein Feld durchzuführenden Überfahrt entspricht,
Empfangen einer Eingabe, die einen Betriebsparameter des Arbeitsfahrzeugs (10) oder des zugehörigen Arbeitsgeräts (12) angibt, von mindestens einem von dem Sensor (111), der Bedienerschnittstelle (119) oder einer zugehörigen Speichervorrichtung (118) des Rechnersystems (112);
Bestimmen des Betriebsparameters basierend auf der empfangenen Eingabe;
Anpassen eines Abschnitts der Schwadenlinie basierend auf dem ermittelten Betriebsparameter vor dem Durchführen der Überfahrt über das Feld; und
Steuern eines Betriebs des Arbeitsfahrzeugs (10) derart, dass das Arbeitsfahrzeug (10) entlang des angepassten Abschnitts der Schwadenlinie fährt, um die Überfahrt über das Feld durchzuführen,
**dadurch gekennzeichnet, dass** der Betriebsparameter einen Schwenkwinkel des Arbeitsfahrzeugs (10) und des zugehörigen Arbeitsgeräts (12) umfasst.

2. System (100) nach Anspruch 1, wobei beim Anpassen des Abschnitts der Schwadenlinie das Rechnersystem (112) ferner dazu konfiguriert ist, einen oder mehrere gekrümmte Abschnitte der Schwadenlinie basierend auf dem bestimmten Betriebsparameter vor dem Durchführen der Überfahrt über das Feld anzupassen.

3. System (100) nach einem der vorstehenden Ansprüche, wobei beim Anpassen mindestens des Abschnitts der Schwadenlinie das Rechnersystem (112) ferner konfiguriert ist zum:
Identifizieren eines gekrümmten Abschnitts der abgerufenen Schwadenlinie;
Bestimmen eines Radius des identifizierten gekrümmten Abschnitts;
Bestimmen eines minimalen Wenderadius des Arbeitsfahrzeugs (10) basierend auf dem bestimmten Betriebsparameter;
Vergleichen des Radius des identifizierten gekrümmten Abschnitts mit dem minimalen Wenderadius des Arbeitsfahrzeugs (10); und
wenn der Radius des identifizierten gekrümmten Abschnitts den minimalen Wenderadius des Arbeitsfahrzeugs (10) unterschreitet, Anpassen des identifizierten gekrümmten Abschnitts der abgerufenen Schwadenlinie vor dem Durchführen der Überfahrt über das Feld.

4. System (100) nach einem der vorstehenden Ansprüche, wobei, beim Anpassen des identifizierten gekrümmten Abschnitts der abgerufenen Schwadenlinie, das Rechnersystem (112) ferner konfiguriert ist, den identifizierten gekrümmten Abschnitt der abgerufenen Schwadenlinie derart anzupassen, dass der Radius des identifizierten gekrümmten Abschnitts vor dem Durchführen der Überfahrt über das Feld vergrößert wird.

5. System (100) nach einem der vorstehenden Ansprüche, wobei der Betriebsparameter mindestens eines von einer Länge des Arbeitsfahrzeugs (10) oder einem maximalen Lenkwinkel des Arbeitsfahrzeugs (10) umfasst.

6. System (100) nach einem der vorstehenden Ansprüche, wobei der Betriebsparameter mindestens eines von einer Anhängevorrichtungslänge oder einem Anhängevorrichtungstyp umfasst.

7. System (100) nach einem der vorstehenden Ansprüche, wobei, beim Empfangen der Eingabe, das Rechnersystem (112) ferner konfiguriert ist, um die Eingabe, die den Betriebsparameter des Arbeitsfahrzeugs (10) angibt, von dem Sensor (111) zu empfangen.

8. System (100) nach einem der vorstehenden Ansprüche, wobei, beim Empfangen der Eingabe, das Rechnersystem (112) ferner konfiguriert ist, um die Eingabe, die den Betriebsparameter des Arbeitsfahrzeugs (10) angibt, von der Bedienerschnittstelle (119) zu empfangen.

9. System (100) nach einem der vorstehenden Ansprüche, wobei, beim Empfangen der Eingabe, das Rechnersystem (112) ferner konfiguriert ist, um auf die Eingabe zuzugreifen, die den Betriebsparameter der zugehörigen Speichervorrichtung (118) des Rechnersystems (112) angibt.

10. Computerimplementiertes Verfahren (300) zum Anpassen von Schwadenlinien für ein Arbeitsfahrzeug (10), wobei das Verfahren (300) Folgendes umfasst:
Zugreifen auf eine Schwadenlinie, die einer durch das Arbeitsfahrzeug (10) über ein Feld durchzuführenden Überfahrt entspricht,
Empfangen einer Eingabe, die einen Betriebsparameter des Arbeitsfahrzeugs (10) oder eines zugehörigen Arbeitsgeräts (12) angibt, von mindestens einem von einem Sensor (111), einer Bedienerschnittstelle (119) des Arbeitsfahrzeugs (10) oder einer zugehörigen Speichervorrichtung (118) des Rechnersystems (112);
Bestimmen des Betriebsparameters basierend auf der empfangenen Eingabe;
Anpassen eines Abschnitts der Schwadenlinie basierend auf dem ermittelten Betriebsparameter vor dem Durchführen der Überfahrt über das Feld; und
Steuern eines Betriebs des Arbeitsfahrzeugs (10) derart, dass das Arbeitsfahrzeug (10) entlang des angepassten Abschnitts der Schwadenlinie fährt, um die Überfahrt über das Feld durchzuführen,
**dadurch gekennzeichnet, dass** der Betriebsparameter einen Schwenkwinkel des Arbeitsfahrzeugs (10) und des zugehörigen Arbeitsgeräts (12) umfasst.

11. Verfahren (300) nach Anspruch 10, wobei das Anpassen des Abschnitts der Schwadenlinie das Anpassen eines oder mehrerer gekrümmter Abschnitte der Schwadenlinie basierend auf dem bestimmten Betriebsparameter umfasst.

12. Verfahren (300) nach einem der Ansprüche 10 oder 11, wobei das Anpassen des Abschnitts der Schwadenlinie umfasst:
Identifizieren eines gekrümmten Abschnitts der abgerufenen Schwadenlinie;
Bestimmen eines Radius des identifizierten gekrümmten Abschnitts;
Bestimmen eines minimalen Wenderadius des Arbeitsfahrzeugs (10) basierend auf dem bestimmten Betriebsparameter;
Vergleichen des Radius des identifizierten gekrümmten Abschnitts mit dem minimalen Wenderadius des Arbeitsfahrzeugs (10); und
wenn der Radius des identifizierten gekrümmten Abschnitts den minimalen Wenderadius des Arbeitsfahrzeugs (10) unterschreitet, Anpassen des identifizierten gekrümmten Abschnitts der abgerufenen Schwadenlinie.

13. Verfahren (300) nach einem der Ansprüche 10 bis 12, wobei das Anpassen des Abschnitts der Schwadenlinie ferner das Anpassen des identifizierten gekrümmten Abschnitts der abgerufenen Schwadenlinie umfasst, derart, dass der Radius des identifizierten gekrümmten Abschnitts vergrößert wird.

14. Verfahren (300) nach einem der Ansprüche 10 bis 13, wobei der Betriebsparameter mindestens eines von einer Länge des Arbeitsfahrzeugs (10) oder einem maximalen Lenkwinkel des Arbeitsfahrzeugs (10) umfasst.

## Revendications

1. Système (100) permettant d'ajuster des lignes d'andain pour un véhicule de travail (10), le système (100) comprenant un capteur (111) configuré pour capturer des données de paramètres de fonctionnement associées au véhicule de travail (10) ou à un outil (12) associé, une interface utilisateur (119) configurée pour recevoir une entrée de paramètres de fonctionnement depuis un opérateur du véhicule de travail (10) ou de l'outil (12) associé, et un système informatique (112) couplé en communication au capteur (111) et à l'interface utilisateur (119), le système informatique (112) étant configuré pour :
accéder à une ligne d'andain correspondant à un passage à réaliser à travers un champ par le véhicule de travail (10),
recevoir une entrée indiquant un paramètre de fonctionnement du véhicule de travail (10) ou de l'outil (12) associé à partir d'au moins l'un parmi le capteur (111), l'interface utilisateur (119) ou un dispositif de mémoire (118) associé du système informatique (112) ;
déterminer le paramètre de fonctionnement en fonction de l'entrée reçue ;
ajuster une partie de la ligne d'andain en fonction du paramètre de fonctionnement déterminé avant la réalisation du passage à travers le champ ; et
commander un fonctionnement du véhicule de travail (10) de telle sorte que le véhicule de travail (10) se déplace le long de la partie ajustée de la ligne d'andain pour réaliser le passage à travers le champ,
**caractérisé en ce que** le paramètre de fonctionnement comprend un angle de rotation du véhicule de travail (10) et de l'outil (12) associé.

2. Système (100) selon la revendication 1, dans lequel, lors de l'ajustement de la partie de la ligne d'andain, le système informatique (112) est en outre configuré pour ajuster une ou plusieurs parties incurvées de la ligne d'andain en fonction du paramètre de fonctionnement déterminé avant la réalisation du passage à travers le champ.

3. Système (100) selon l'une quelconque des revendications précédentes, dans lequel, lors de l'ajustement d'au moins la partie de la ligne d'andain, le système informatique (112) est en outre configuré pour :
identifier une partie incurvée de la ligne d'andain accédée ;
déterminer un rayon de la partie incurvée identifiée ;
déterminer un rayon de braquage minimal du véhicule de travail (10) en fonction du paramètre de fonctionnement déterminé ;
comparer le rayon de la partie incurvée identifiée au rayon de braquage minimal du véhicule de travail (10) ; et
lorsque le rayon de la partie incurvée identifiée tombe en dessous du rayon de braquage minimal du véhicule de travail (10), ajuster la partie incurvée identifiée de la ligne d'andain accédée avant la réalisation du passage à travers le champ.

4. Système (100) selon l'une quelconque des revendications précédentes, dans lequel, lors de l'ajustement de la partie incurvée identifiée de la ligne d'andain accédée, le système informatique (112) est en outre configuré pour ajuster la partie incurvée identifiée de la ligne d'andain accédée de telle sorte que le rayon de la partie incurvée identifiée est augmenté avant la réalisation du passage à travers le champ.

5. Système (100) selon l'une quelconque des revendications précédentes, dans lequel le paramètre de fonctionnement comprend au moins l'un parmi une longueur du véhicule de travail (10) ou un angle d'orientation maximal du véhicule de travail (10).

6. Système (100) selon l'une quelconque des revendications précédentes, dans lequel le paramètre de fonctionnement comprend au moins l'un parmi une longueur d'attelage ou un type d'attelage.

7. Système (100) selon l'une quelconque des revendications précédentes, dans lequel, lors de la réception de l'entrée, le système informatique (112) est en outre configuré pour recevoir, en provenance du capteur (111), l'entrée indiquant le paramètre de fonctionnement du véhicule de travail (10).

8. Système (100) selon l'une quelconque des revendications précédentes, dans lequel, lors de la réception de l'entrée, le système informatique (112) est en outre configuré pour recevoir, en provenance de l'interface utilisateur (119), l'entrée indiquant le paramètre de fonctionnement du véhicule de travail (10).

9. Système (100) selon l'une quelconque des revendications précédentes, dans lequel, lors de la réception de l'entrée, le système informatique (112) est en outre configuré pour accéder à l'entrée indiquant le paramètre de fonctionnement du dispositif de mémoire (118) associé du système informatique (112).

10. Procédé (300) mis en œuvre par ordinateur, permettant d'ajuster des lignes d'andain pour un véhicule de travail (10), le procédé (300) comprenant :
l'accès à une ligne d'andain correspondant à un passage à réaliser à travers un champ par le véhicule de travail (10),
la réception d'une entrée indiquant un paramètre de fonctionnement du véhicule de travail (10) ou d'un outil (12) associé à partir d'au moins l'un parmi un capteur (111), une interface utilisateur (119) du véhicule de travail (10) ou un dispositif de mémoire (118) associé du système informatique (112) ;
la détermination du paramètre de fonctionnement en fonction de l'entrée reçue ;
l'ajustement d'une partie de la ligne d'andain en fonction du paramètre de fonctionnement déterminé avant la réalisation du passage à travers le champ ; et
la commande d'un fonctionnement du véhicule de travail (10) de telle sorte que le véhicule de travail (10) se déplace le long de la partie ajustée de la ligne d'andain pour réaliser le passage à travers le champ,
**caractérisé en ce que** le paramètre de fonctionnement comprend un angle de rotation du véhicule de travail (10) et de l'outil (12) associé.

11. Procédé (300) selon la revendication 10, dans lequel l'ajustement de la partie de la ligne d'andain comprend l'ajustement d'une ou de plusieurs parties incurvées de la ligne d'andain, en fonction du paramètre de fonctionnement déterminé.

12. Procédé (300) selon l'une quelconque des revendications 10 ou 11, dans lequel l'ajustement de la partie de la ligne d'andain comprend :
l'identification d'une partie incurvée de la ligne d'andain accédée ;
la détermination d'un rayon de la partie incurvée identifiée ;
la détermination d'un rayon de braquage minimal du véhicule de travail (10) en fonction du paramètre de fonctionnement déterminé ;
la comparaison du rayon de la partie incurvée identifiée au rayon de braquage minimal du véhicule de travail (10) ; et
lorsque le rayon de la partie incurvée identifiée tombe en dessous du rayon de braquage minimal du véhicule de travail (10), l'ajustement de la partie incurvée identifiée de la ligne d'andain accédée.

13. Procédé (300) selon l'une quelconque des revendications 10 à 12, dans lequel l'ajustement de la partie de la ligne d'andain comprend en outre l'ajustement de la partie incurvée identifiée de la ligne d'andain accédée de telle sorte que le rayon de la partie incurvée identifiée est augmenté.

14. Procédé (300) selon l'une quelconque des revendications 10 à 13, dans lequel le paramètre de fonctionnement comprend au moins l'un parmi une longueur du véhicule de travail (10) ou un angle d'orientation maximal du véhicule de travail (10).
